# FASCICULE DE BREVET EUROPEEN

(11) **EP 0 445 055 B1**
(45) Date de publication et mention de la délivrance du brevet: **01.06.1994**
(21) Numéro de dépôt: 91440015.5
(22) Date de dépôt: 27.02.1991
(51) Int. Cl.: A01B 33/08, A01B 13/06

(54) **Machine agricole de travail du sol avec rotor facilement interchangeable**
Landwirtschaftliche Maschine zur Bodenbearbeitung mit leicht auswechselbarem Rotor
Agricultural soil working machine with an easily interchangeable rotor

(30) Priorité: 27.02.1990 FR 9002607
(43) Date de publication de la demande: 04.09.1991
(73) Titulaire: KUHN S.A., F-67700 Saverne (FR)
(72) Inventeur: Kirch, Michel, F-57430 Sarralbe (FR); Seemann, Michel, F-57370 Phalsbourg (FR)

(56) Documents cités:
- EP-A- 0 307 334
- DE-A- 3 524 752
- FR-A- 2 327 716
- GB-A- 1 427 717

## Description

La présente invention concerne une machine agricole de travail du sol comportant un châssis muni d'au moins une structure porteuse comprenant deux organes porteurs qui supportent un rotor dont l'axe longitudinal s'étend au moins sensiblement horizontalement et transversalement par rapport à la direction d'avance au travail, et qui est lié aux organes porteurs à l'aide d'éléments de liaison, les éléments de liaison liant le rotor à l'un au moins des organes porteurs comportant des organes de positionnement du rotor par rapport à cet organe porteur et au moins un organe d'assemblage dont l'axe longitudinal s'étend au moins sensiblement orthogonalement à l'axe longitudinal du rotor, lesdits organes de positionnement comportant notamment deux surfaces de contact dont l'une est prévue sur ledit organe porteur et l'autre sur le rotor, qui s'étendent au moins sensiblement suivant la direction de l'axe longitudinal dudit rotor et qui sont maintenues en contact l'une avec l'autre au moyen dudit (desdits) organe(s) d'assemblage.

Il est connu dans l'état de la technique (FR-A-2 327 716) une machine agricole de travail du sol permettant selon un principe très intéressant de remplacer son rotor par d'autres rotors susceptibles d'effectuer d'autres travaux, élargissant ainsi le domaine d'utilisation. La structure porteuse de cette machine agricole est formée de deux organes porteurs sensiblement verticaux, dont l'un est constitué par un carter latéral et l'autre par une paroi latérale, et qui sont liés entre-eux à leur extrémité supérieure par une poutre. Monté entre les extrémités inférieures des deux organes porteurs de la structure porteuse, le rotor s'étend orthogonalement par rapport à la direction d'avance et est entraîné au moyen du carter latéral.

Avantageusement, l'organe d'entraînement issu du carter latéral et les organes de positionnement dudit carter latéral sont confondus sur un même embout d'arbre. Cet embout comporte une rainure en "V" orientée perpendiculairement aux organes porteurs du châssis. L'embout est de plus muni de deux pattes comportant chacune un trou cylindrique qui est traversé par une vis d'assemblage dont l'axe longitudinal s'étend orthogonalement à l'axe longitudinal du rotor. Ces deux vis d'assemblage sont vissées dans une bride munie d'un pied de centrage. Ce pied de centrage s'engage dans un alésage borgne prévu dans un tenon triangulaire agencé à l'extrémité longitudinale correspondante du rotor. Le pied de centrage a pour but d'assurer le positionnement longitudinal adéquat du rotor par rapport aux organes porteurs du châssis. Son positionnement radial est obtenu lorsque les côtés du tenon sont en contact avec les flancs de la rainure de l'embout, ces flancs jouant le rôle d'organes de positionnement. On comprend ainsi aisément qu'il est facile de réaliser une liaison complète entre l'embout et le tenon. En effet, grâce à cet embout jouant également le rôle d'organe d'entraînement, il est possible, par une translation du châssis dans le plan de son carter latéral, de venir coiffer le tenon triangulaire du rotor. Cette translation est automatiquement stoppée lorsque les flancs de la rainure sont en contact avec les côtés du tenon. Pour que la liaison embout-rotor soit complète, il ne reste plus qu'à plaquer la bride contre le tenon en serrant les vis d'assemblage.

A son autre extrémité, le rotor est équipé d'un palier comportant un corps monté d'une manière connue de l'homme de l'art sur l'extrémité de l'âme centrale du rotor. Ce corps présente notamment une section cylindrique qui s'engage dans une échancrure de forme complémentaire, ouverte vers le bas et pratiquée à l'extrémité inférieure de la paroi latérale. Le corps est de plus pourvu d'une collerette percée de trous cylindriques permettant le passage de boulons dont les axes longitudinaux sont parallèles à l'axe longitudinal du rotor. Ces boulons traversent également la paroi latérale afin de plaquer la collerette du palier du rotor contre ladite paroi latérale. En pratique, cet agencement permet un changement relativement rapide du rotor, mais présente cependant quelques inconvénients.

En effet, notamment du côté entraînement, on remarque que les vis d'assemblage sont soumises à un serrage élastique, c'est-à-dire que les vis d'assemblage ne plaquent pas les surfaces qu'elles traversent l'une contre l'autre. De ce fait, il y a, compte tenu des vibrations générées durant le travail, un risque de desserrage desdites vis.

De plus, lors du montage d'un rotor, il est nécessaire de mettre en place à la fois le pied de centrage côté carter latéral et de plaquer la collerette du palier à l'extérieur de la paroi latérale. Or, compte tenu des tolérances de fabrication à la fois du rotor et de la structure porteuse du châssis, cela entraîne irrémédiablement la déformation de la paroi latérale lorsque l'on serre les boulons liant le palier du rotor à ladite paroi latérale. Du reste, avant de pouvoir introduire les boulons, il faut encore au préalable orienter le palier, afin de faire coïncider les trous de passage de la collerette avec ceux de la paroi latérale, c'est-à-dire qu'il faut nécessairement tourner le palier du rotor dans l'échancrure de ladite paroi latérale. Lors du serrage de chacun de ces boulons, il faut aussi bloquer l'écrou situé d'un côté de la paroi latérale et serrer la vis située de l'autre côté de ladite paroi latérale, ce qui n'est pas aisé. En sus, la déformation de la paroi latérale entraîne également un serrage élastique. Ce problème rejoint celui décrit du côté de l'entraînement.

La présente invention a pour but de faciliter le montage et d'améliorer la tenue de la fixation, tout en conservant l'avantage de l'interchangeabilité rapide du rotor.

A cet effet, la machine agricole de travail du sol selon la présente invention est caractérisée par le fait que le ou les organes d'assemblage traversent les surfaces de contact qui comportent, à cet effet, des trous dont un certain nombre au moins présente une forme autorisant une compensation des tolérances de fabrication du rotor et/ou de la structure porteuse dans une direction au moins sensiblement parallèle à l'axe longitudinal du rotor.

Grâce à cette caractéristique, les organes d'assemblage plaquent les surfaces de contact qu'ils traversent, l'une contre l'autre, et réalisent ainsi une liaison franche.

Du reste, la forme d'un certain nombre desdits trous traversant les surfaces de contact, permet de lier le rotor à la structure porteuse sans aucune déformation de ladite structure porteuse.

Dans une solution particulièrement avantageuse, les trous, présentant une forme autorisant une compensation des tolérances de fabrication du rotor et/ou de la structure porteuse dans une direction au moins sensiblement parallèle à l'axe longitudinal du rotor sont des trous oblongs qui s'étendent dans une direction au moins sensiblement parallèle à l'axe longitudinal du rotor.

Selon une autre caractéristique de l'invention, chaque surface de contact est formée par deux portions de surface de contact qui s'étendent, en vue suivant l'axe longitudinal du rotor, de part et d'autre dudit axe longitudinal. Dans une réalisation selon l'invention, les portions de surface de contact pourront être planes et plus particulièrement convergentes, de préférence vers le haut. De plus, il est prévu selon l'invention, que les deux portions de surface de contact de chaque surface de contact forment entre elles un angle obtu. Dans cette première réalisation selon l'invention, il est également prévu que les deux portions de surface de contact s'étendent en-dessous d'un plan horizontal contenant l'axe longitudinal du rotor. Plus particulièrement, les deux portions de surface de contact pourront se couper réellement ou virtuellement au moins sensiblement au niveau de l'axe longitudinal du rotor.

Dans une deuxième réalisation selon l'invention, les deux portions de surface de contact de chaque surface de contact sont au moins sensiblement parallèles entre elles. De plus, il est prévu selon l'invention, que les deux portions de surface de contact de chaque surface de contact soient au moins sensiblement coplanaires. Il est également prévu que ces deux portions de surface de contact s'étendent au moins sensiblement au niveau de l'axe longitudinal du rotor. Selon une caractéristique supplémentaire de l'invention, les deux portions de surface de contact de chaque surface de contact s'étendent au moins sensiblement horizontalement.

Dans cette deuxième réalisation, les portions de surface de contact ne positionnent le rotor que suivant une seule direction ; il est donc nécessaire que les organes de positionnement comportent en sus deux portions de surface de positionnement solidaires dudit organe porteur. Ces portions de surface de positionnement de l'organe porteur collaborent avec deux portions de surface de positionnement solidaires du rotor et au moins sensiblement orthogonales aux deux portions de surface de contact également solidaires du rotor. En sus, il est prévu que ces deux portions de surface de positionnement de chaque surface de positionnement s'étendent au moins sensiblement symétriquement par rapport à un plan dirigé vers le haut. Préférentiellement, ce plan est au moins sensiblement vertical et passe par l'axe longitudinal du rotor.

Globalement, selon une caractéristique particulièrement intéressante de l'invention, les deux portions de surface de contact de chaque surface de contact s'étendent au moins sensiblement symétriquement par rapport à un plan dirigé vers le haut. Préférentiellement, ce plan est au moins sensiblement vertical et passe par l'axe longitudinal du rotor. De plus, il est prévu que chaque portion de surface de contact soit traversée par au moins un organe d'assemblage.

Selon une autre caractéristique particulièrement intéressante de l'invention, l'organe porteur comporte une paroi dirigée vers le haut et de préférence au moins sensiblement verticale, et chaque portion de surface de contact est traversée par un ou plusieurs organes d'assemblage s'étendant du côté de ladite paroi opposé à celui où s'étend le rotor. Dans d'autres réalisations selon l'invention, il est prévu que chaque portion de surface de contact soit traversée par au moins deux organes d'assemblage dont l'un, ou un certain nombre d'entre eux, s'étendent d'un côté de ladite paroi et l'autre, ou les autres, s'étendent de l'autre côté de ladite paroi.

Une solution très avantageuse est obtenue lorsque l'axe longitudinal du ou des organes d'assemblage s'étend au moins sensiblement orthogonalement aux deux surfaces de contact. Selon une autre caractéristique supplémentaire de l'invention, il est prévu un organe de protection protégeant en partie au moins les éléments de liaison liant le rotor à la structure porteuse. Dans une solution avantageuse, cet organe de protection est constitué par un patin pouvant être solidaire des éléments de liaison.

Selon une autre caractéristique très intéressante de l'invention, il est prévu que les éléments de liaison comportent en sus des moyens de guidage permettant la mise en place automatique du rotor dans la structure porteuse correspondante. Plus particulièrement, dans le cadre de la première réalisation selon l'invention, les moyens de guidage sont constitués par les portions de surface de contact.

Dans une autre réalisation selon l'invention ou dans le deuxième exemple de réalisation, les moyens de guidage comportent deux portions de surface de guidage solidaires du rotor. Ces deux portions s'étendent au moins sensiblement suivant la direction de l'axe longitudinal du rotor et sont convergentes vers le haut. Dans une solution particulièrement avantageuse, les deux portions de surface de guidage du rotor forment entre elles un angle aigu. Il est également prévu dans le cadre de l'invention, qu'à l'angle de chaque portion de surface de positionnement et de la portion de surface de contact correspondante de l'organe porteur respectif se situe un chanfrein. Ce chanfrein fait partie des moyens de guidage et collabore avec la portion de surface de guidage correspondante du rotor lors du montage de celui-ci dans ledit organe porteur.

Selon une caractéristique particulièrement avantageuse de l'invention, les deux portions de surface de guidage s'étendent au moins sensiblement symétriquement par rapport à un plan dirigé vers le haut. Préférentiellement, ce plan est au moins sensiblement vertical et passe par l'axe longitudinal du rotor.

En sus, il est prévu que l'organe porteur respectif présente une échancrure épousant au moins sensiblement les deux portions de surface de guidage du rotor, de sorte à laisser subsister un certain jeu entre ladite échancrure et lesdites portions de surface de guidage lorsque les surfaces de contact sont en contact l'une avec l'autre.

D'autres caractéristiques de l'invention apparaissent dans la description suivante de deux exemples non limitatifs de réalisation faite en référence au dessin annexé sur lequel :
- la figure 1 représente une vue latérale d'une machine agricole de travail du sol selon l'invention ;
- la figure 2 représente une vue latérale du côté opposé de ladite machine agricole ;
- la figure 3 représente une vue (suivant la flèche III de la figure 2) d'une partie du rotor liée au carter latéral ;
- la figure 4 représente une coupe de rotor suivant le plan IV-IV de la figure 3 ou suivant le plan XIV-XIV de la figure 8.
- la figure 5 représente une vue (suivant la flèche V de la figure 1) d'une partie du rotor liée à la paroi latérale.
- la figure 6 représente une vue (suivant la flèche VI de la figure 5), à une échelle agrandie, de la liaison du rotor avec la paroi latérale ;
- la figure 7 représente un autre exemple de réalisation de la liaison liant un rotor à une paroi latérale ;
- la figure 8 représente une vue (suivant la flèche VIII de la figure 7) de la liaison liant le rotor aux organes porteurs ; et
- la figure 9 représente une vue à une échelle agrandie de la liaison liant le rotor à la paroi latérale.

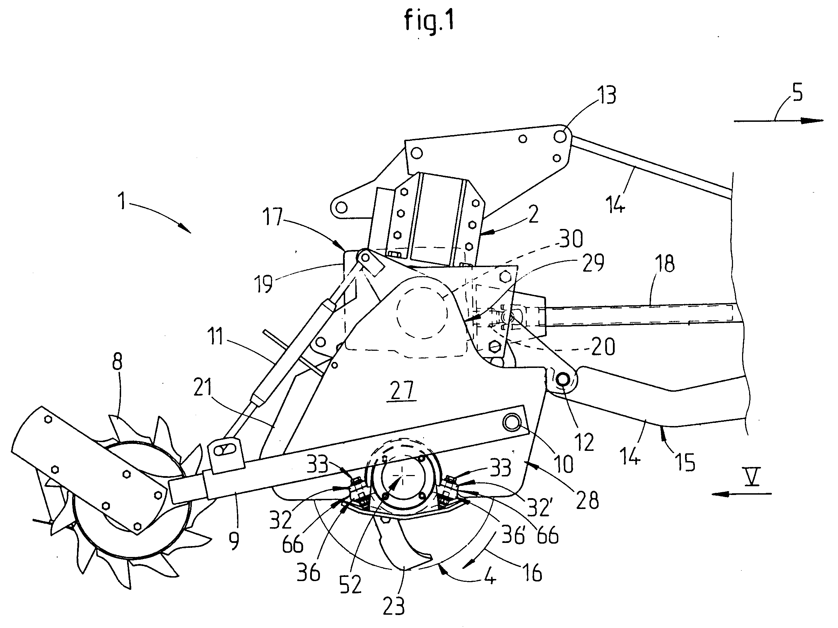

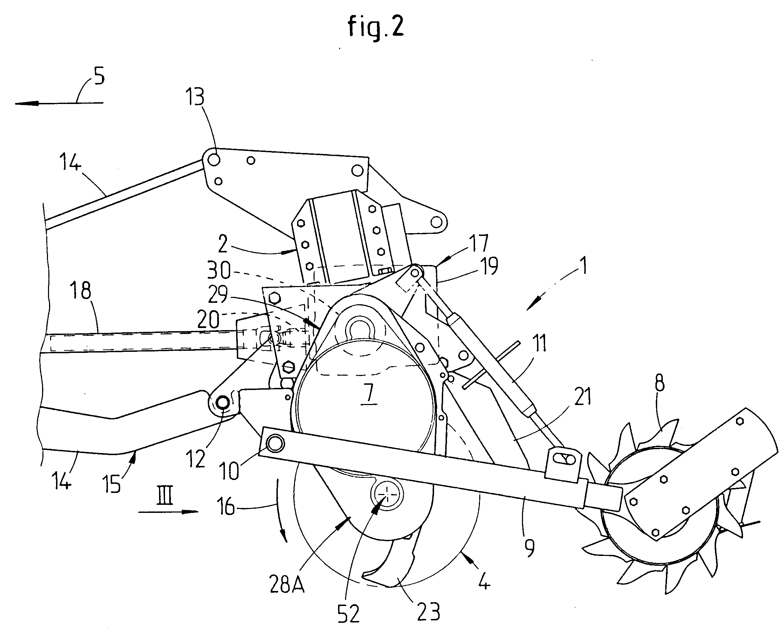

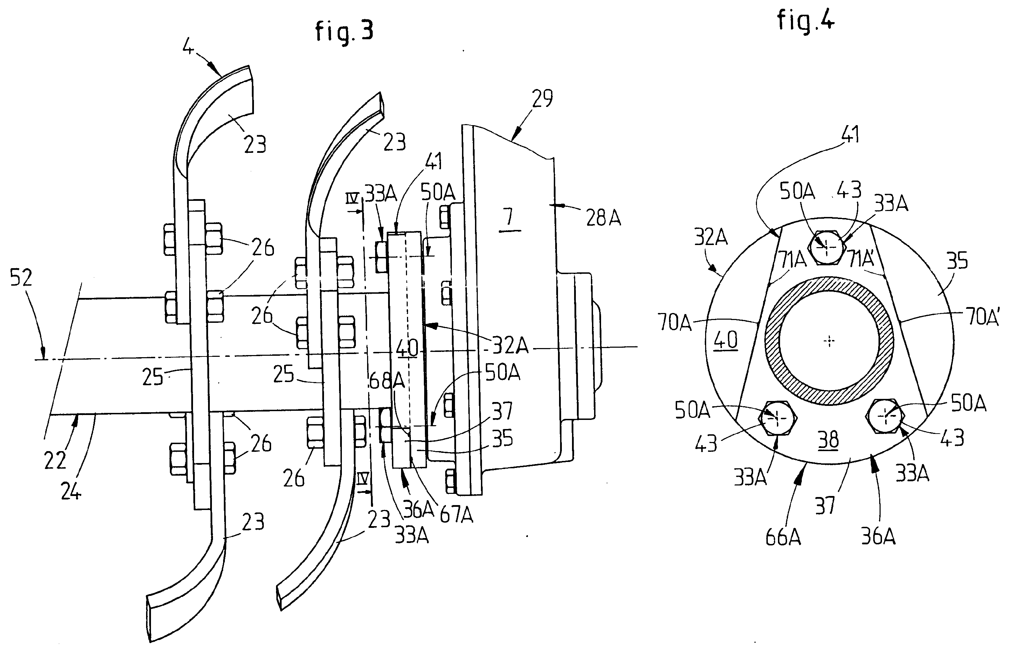

Les figures 1 et 2 montrent une machine agricole de travail du sol (1) selon l'invention. Elle comporte un châssis (2) muni d'une structure porteuse (29) formée de deux organes porteurs (28, 28A) sensiblement verticaux, dont l'un est constitué par un carter latéral (7) et l'autre par une paroi latérale (27), et qui sont liés entre eux à leur extrémité supérieure par une poutre (30). La structure porteuse (29) s'étend transversalement par rapport à la direction d'avance (5) au travail et supporte notamment un rotor (4). Les organes porteurs (28, 28A) de la structure porteuse (29), quant à eux, comportent à leur extrémité inférieure des organes de positionnement (32, 32′, 32A) qui collaborent avec des organes de positionnement (36, 36′, 36A) complémentaires destinés à supporter le rotor (4) (voir également les figures 3 et 4). Ces organes de positionnement (32, 32′, 32A, 36, 36′, 36A) permettent la mise en place automatique du rotor (4) par rapport à la structure porteuse (29) afin de pouvoir solidariser le rotor (4) avec ladite structure porteuse (29) par des organes d'assemblage (33, 33A). Lesdits organes de positionnement (32, 32′, 32A, 36, 36′, 36A) et lesdits organes d'assemblage (33, 33A) composent les éléments de liaison (66, 66A) qui seront décrits plus en détail ultérieurement.

La structure porteuse (29) du châssis (2) supporte également un rouleau (8) agencé derrière le rotor (4), compte tenu du sens d'avance (5) au travail, et dont l'axe longitudinal s'étend parallèlement à l'axe longitudinal (52) du rotor (4). Ce rouleau (8), du type "Packer" dans l'exemple représenté, est guidé en rotation dans les extrémités arrière de deux bras (9) liés chacun à leur extrémité avant à la structure porteuse (29) du châssis (2) au moyen d'une articulation (10) d'axe parallèle à l'axe longitudinal du rouleau (8) ou du rotor (4). Entre chacun de ces bras (9) et la structure porteuse (29) est prévue une jambe (11) de longueur variable. Grâce à ces deux jambes (11), il est possible de régler la hauteur du rouleau (8) par rapport à la structure porteuse (29). Au travail, le rouleau (8) roule sur le sol. De cette sorte, il détermine la profondeur de travail du rotor (4) tout en participant activement au travail du sol.

Le châssis (2) comporte par ailleurs deux points d'attelage inférieurs (12) et un point d'attelage supérieur (13) prévus pour l'accouplement de la machine agricole de travail du sol (1) à l'attelage trois points (14) d'un tracteur agricole (15) dont on n'a représenté sur les figures 1 et 2 qu'une partie des bielles de l'attelage.

Le rotor (4), supporté par le châssis (2), tourne autour de son axe longitudinal (52) dans le sens (16), c'est-à-dire qu'à l'avant, le rotor (4) tourne vers le bas. Cet entraînement en rotation est réalisé par des moyens d'entraînement (17) recevant eux-mêmes le mouvement de l'arbre de prise de force (non représenté) du tracteur agricole (15) au moyen d'un arbre de transmission à joints universels (18) représenté sur les figures 1 et 2. Les moyens d'entraînement (17) sont connus de l'homme de l'art et comportent notamment un carter central (19). Le carter central (19) est un carter de renvoi qui pourra avantageusement être constitué sous forme de boîte de vitesse. Il comporte d'une part un arbre d'entrée (20) lié à l'arbre de transmission (18) et d'autre part un arbre de sortie (non représenté) qui transmet le mouvement au carter latéral (7), transmettant lui-même par l'intermédiaire d'un organe d'entraînement (35) le mouvement au rotor (4) (figures 3 et 4).

Au-dessus du rotor (4) s'étend un capot également supporté par la structure porteuse (29) du châssis (2), et dont seul le volet arrière (21) apparaît sur les figures 1 et 2. Ce volet arrière (21) est, d'une manière connue de l'homme de l'art, réglable angulairement de sorte à influencer la trajectoire de la terre projetée vers l'arrière par le rotor (4).

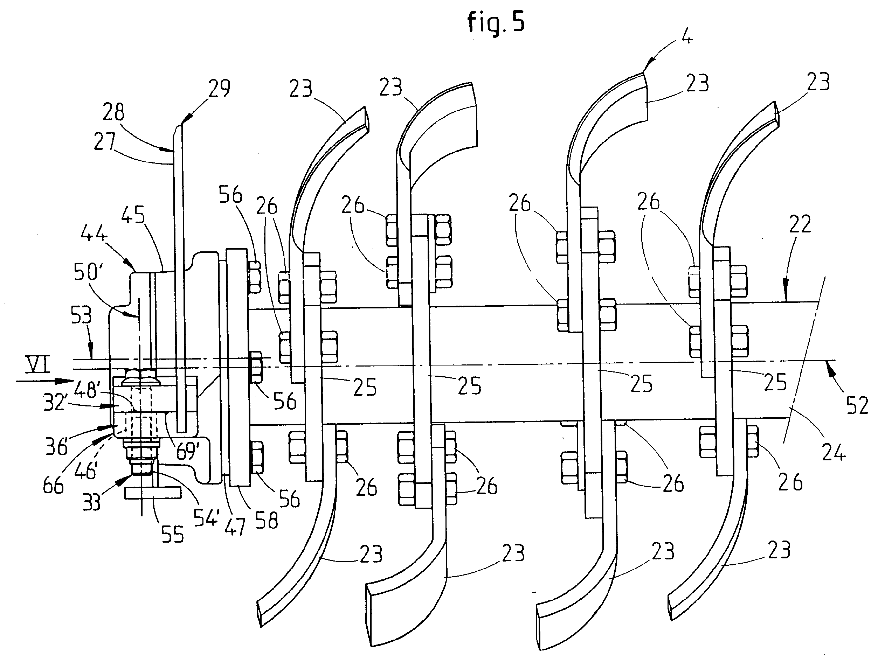

Le rotor (4) utilisé dans cet exemple de réalisation selon l'invention apparaît en particulier sur les figures 3 et 5. Ce rotor (4) est composé principalement d'un support central (22) qui comporte notamment des outils de travail du sol (23) montés de manière démontable sur ledit support central (22). A cet effet, le support central (22) est constitué par une âme centrale (24) sur laquelle sont agencés des flasques (25). Chaque flasque (25) possède une forme allongée à chaque extrémité de laquelle est fixé un desdits outils de travail du sol (23) au moyen de deux boulons (26). Dans l'exemple décrit, chaque flasque (25) est ainsi équipé de deux outils de travail du sol (23) qui s'étendent diamètralement opposés l'un de l'autre par rapport à l'axe longitudinal (52) du rotor (4).

Sur les figures 3 et 4 il apparaît aussi, que le support central (22) du rotor (4) comporte également un organe d'entraînement (37) lié rigidement à l'extrémité longitudinale du support central (22) située près du carter latéral (7). Cet organe d'entraînement (37) reçoit le mouvement de rotation transmis par l'organe d'entraînement complémentaire (35) issu du carter latéral (7), et permet la mise en rotation du rotor (4). Afin de réduire l'encombrement et simplifier la réalisation des organes d'entraînement (35, 37), l'organe de positionnement (32A) de l'organe porteur (28A) est confondu avec l'organe d'entraînement (35) issu du carter latéral (7). De même, l'organe d'entraînement (37) du rotor (4) est confondu avec l'organe de positionnement associé (36A) dudit rotor (4).

Dans cette réalisation, l'organe de positionnement (36A) (ou l'organe d'entraînement (37)) -côté rotor (4)- se compose d'un tenon (38) présentant deux portions (71A, 71A′) de surface de positionnement planes et convergentes. Lié au support central (22) du rotor (4), ce tenon (38) collabore avec un flasque (40) dans lequel a été réalisé un logement (41). Ce flasque (40) constitue l'organe de positionnement (32A) (ou l'organe d'entraînement (35)) -côté organe porteur (28A)-. Comme on peut le voir sur la figure 4, le logement (41) présente également deux portions (70A, 70A′) de surface de positionnement planes et convergentes qui sont situées l'une en face de l'autre. De plus, ce logement (41) est ouvert à son extrémité la plus large, c'est-à-dire du côté où ses deux portions (70A, 70A′) de surface de positionnement sont les plus éloignées l'une de l'autre, de façon à présenter une forme complémentaire à celle du tenon (38).

Pour réaliser l'accouplement du tenon (38) avec le logement (41) du flasque (40), il suffit de faire subir à la structure porteuse (29) du châssis (2) une translation dans le plan de son organe porteur (28A), c'est-à-dire radialement par rapport à l'axe longitudinal (52) du rotor (4), de façon à guider les portions (70A, 70A′) de surface de positionnement du logement (41) du flasque (40) sur les portions (71A, 71A′) de surface de positionnement du tenon (38). L'ensemble de ces portions (70A, 70A′, 71A, 71A′) de surface de positionnement sont ainsi également des surfaces de guidage puisque le tenon (38) est guidé dans le logement (41) lors du montage du rotor (4) dans la structure porteuse (29). Du fait que les portions (70A, 70A′, 71A, 71A′) de surface de positionnement sont convergentes, la translation de la structure porteuse (29) est automatiquement stoppée lorsque lesdites portions (70A, 70A′, 71A, 71A′) de surface de positionnement arrivent en contact. Il ne reste plus qu'à mettre alors en place les organes d'assemblage (33A), c'est-à-dire à visser les vis (43) dans des trous filetés associés (non représentés) du flasque (40), des trous de passage (non représentés) étant prévus à cet effet dans le tenon (38). Ces vis (43) s'étendent chacune suivant un axe (50A) dirigé parallèlement à l'axe longitudinal (52) du rotor (4) et plaquent la face d'extrémité (68A) du tenon (38) contre le fond (67A) du logement (41) du flasque (40). Ceci positionne le rotor (4) suivant la direction de son axe longitudinal (52).

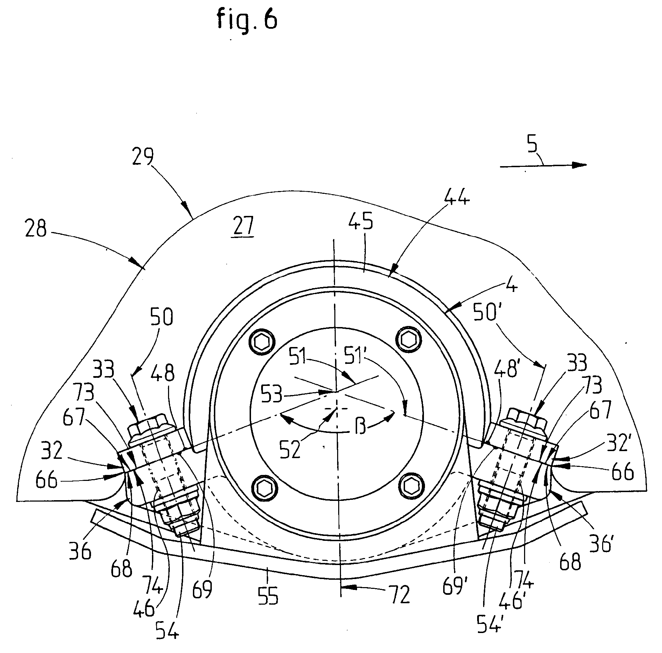

Sur les figures 5 et 6, on voit que le support central (22) du rotor (4) est supporté par un palier (44). Agencé à l'autre extrémité longitudinale du support central (22) située près de l'organe porteur (28), ce palier (44) se compose principalement d'un corps cylindrique (45) et d'un arbre (47), guidé dans ledit corps (45) au moyen d'une liaison cylindrique bien connue de l'homme de l'art. Des vis (56) lient d'une façon rigide, mais néanmoins démontable, l'arbre (47) du palier (44) à un flasque (58), lui-même lié au support central (22) du rotor (4). Un tel agencement du rotor (4) facilite l'échange standard du palier (44), respectivement du support central (22).

Une partie des éléments de liaison (66) permettant de lier le rotor (4) à la paroi latérale (27) de la structure porteuse (29), sont solidaires du corps (45) du palier (44). Ce corps (45) comporte deux organes de positionnement (36, 36′) définissant une surface de contact (68). Situés symétriquement de part et d'autre dudit corps (45), chacun des deux organes de positionnement (36, 36′) présente une portion (69, 69′) de surface de contact plane traversée par un trou (46, 46′) oblong dans une direction au moins sensiblement parallèle à l'axe longitudinal (52) du rotor (4). Ces portions (69, 69′) de surface de contact sont convergentes vers le haut et collaborent avec des portions (48, 48′) de surface de contact plane, également convergentes vers le haut que présentent des organes de positionnement (32, 32′) qui sont situés pour l'essentiel à l'extérieur de la paroi latérale (27) et qui sont solidaires de celle-ci. Ces portions (48, 48′) de surface de contact définissent une surface de contact (67).

Pour fixer le palier (44) du rotor (4) à l'extrémité inférieure de cette paroi latérale (27), il suffit de mettre en place des organes d'assemblage associés (33), c'est-à-dire faire passer un boulon (54, 54′) respectif à travers chacun des deux organes de positionnement (36, 36′) liés au palier (44) du rotor (4) et à travers chacun des organes de positionnement correspondants (32, 32′) liés à la paroi latérale (27). Avantageusement, l'axe (50, 50′) de chaque boulon (54, 54′) s'étend au moins sensiblement orthogonalement à chaque portion (48, 69, 48′, 69′) de surface de contact respective et au moins sensiblement orthogonalement à l'axe longitudinal (52) du rotor (4). Comme visible sur les figures 5 et 6, les boulons (54, 54′) sont situés entièrement à l'extérieur de la paroi latérale (27). Leur serrage est ainsi facilité. A sa partie inférieure, le palier (44) comporte également un patin (55) qui protège notamment les éléments de liaison (66) ainsi définis contre les pierres et les débris végétaux tout en participant au guidage de la machine (1) durant le travail.

Dans cet exemple de réalisation selon l'invention, les portions (48, 48′) de surface de contact des organes de positionnement (32, 32′) sont au moins sensiblement contenues dans deux plans géométriques (51, 51′) parallèles à l'axe longitudinal (52) du rotor (4). Il en est de même des portions (69, 69′) de surface de contact des organes de positionnement (36, 36′). Les deux plans géométriques (51, 51′) se coupent suivant une droite géométrique (53), s'étendant dans le voisinage de l'axe longitudinal (52) du rotor (4), et forment entre eux un angle (β). Dans l'exemple représenté, l'angle (β) est d'environ 140 degrés. De plus, les deux portions (48, 48′), respectivement (69, 69′) de surface de contact de chaque surface de contact (67, 68) s'étendent symétriquement par rapport à un plan (72) au moins sensiblement vertical et passant par l'axe longitudinal (52) du rotor (4).

Cet agencement permet un positionnement précis du rotor (4) par rapport à la paroi latérale (27), et ceci aussi bien suivant la direction d'avance (5) au travail, que suivant une direction au moins sensiblement verticale.

Pour changer de rotor, on fait descendre la machine (1) à l'aide du dispositif de relevage hydraulique (14) du tracteur (15) jusqu'à ce que cette dernière soit en appui sur le sol. On dévisse alors d'une part les vis (43) liant les organes de positionnement (32A, 36A) côté carter latéral (7), et d'autre part les boulons (54, 54′) liant les organes de positionnement (32, 36, 32′, 36′) côté paroi latérale (27). On soulève ensuite la structure porteuse (29) (en fait tout le châssis (2) de la machine (1) ainsi que le rouleau (8)), ce qui laisse le rotor (4) muni de son palier (44) sur le sol. On déplace le tracteur (15) auquel est suspendue la machine sans rotor de façon à placer celle-ci au-dessus d'un autre rotor, les organes de positionnement (36, 36′, 36A) de ce dernier étant en regard des organes de positionnement (32, 32′, 32A) complémentaires des organes porteurs (28, 28A) de la structure porteuse (29). On descend ensuite la machine à l'aide du dispositif hydraulique du tracteur (15) en direction du nouveau rotor. Durant cette manoeuvre, les organes de positionnement (32, 32′, 32A) des organes porteurs (28, 28A) se guident automatiquement sur les organes de positionnement (36, 36′, 36A) prévus aux deux extrémités longitudinales du rotor. La descente est automatiquement stoppée vers le bas par les organes de positionnement (36, 36′) et le tenon (38) (organe de positionnement (36A)) situés respectivement à proximité des deux extrémités longitudinales du rotor (4). Il ne reste plus alors, qu'à remettre en place les organes d'assemblage (33, 33A) et la machine est à nouveau prête à travailler.

Lors du changement de rotor, on se rend bien compte que les portions (48, 48′, 69, 69′) de surface de contact des organes de positionnement (32, 32′, 36, 36′) ne servent pas uniquement au positionnement du rotor (4) par rapport à la structure porteuse (29) du châssis (2), mais participent également au guidage du rotor (4) vers sa position définitive dans la structure porteuse (29). Dans cet exemple de réalisation, les organes de positionnement (32, 32′, 36, 36′) sont également des organes de guidage (73, 74).

En pratique, les organes de positionnement (32A, 36A) et les organes d'assemblage (33A) situés côté carter latéral (7) sont déjà utilisés et ne posent pas de problème majeur. Par contre, il était jusqu'à présent toujours délicat de positionner exactement le palier du rotor par rapport à la paroi latérale. La présente invention résout ce problème, en permettant un montage facile et rapide du rotor (4) à ladite paroi latérale (27), aussi bien suivant l'axe longitudinal (52) du rotor (4) grâce aux trous oblongs (46, 46′), que dans un plan orthogonal audit axe longitudinal (52) par la forme en "V" des surfaces de contact (67, 68). Cette forme en "V", ouverte vers le bas, permet de placer automatiquement l'axe longitudinal (52) du rotor (4) dans sa position de travail. Les trous oblongs (46, 46′) des organes de positionnement (36, 36′) du palier (44) quant à eux permettent le passage des boulons (54, 54′) même lorsque le tenon (38) et le flasque (40) ne sont pas encore plaqués l'un contre l'autre. Pour solidariser complètement le rotor (4) avec la structure porteuse (29), on serre d'abord les vis (43) situées côté carter latéral (7), puis les boulons (54, 54′) situés côté palier (44). De cette façon, il est possible de monter le rotor (4) sans aucun risque de déformation de la paroi latérale (27) suivant une direction parallèle à l'axe longitudinal (52) du rotor (4) tout en compensant les tolérances de fabrication du rotor (4) et/ou de la structure porteuse (29).

Il est évident que l'emplacement et la proximité de la droite géométrique (53) par rapport à l'axe longitudinal (52) du rotor (4) peuvent changer et/ou que la valeur de l'angle (β) peut varier sans qu'on ne sorte pour autant du domaine de protection défini par les revendications, comme cela est notamment le cas dans l'exemple suivant.

Les figures 4, 7, 8 et 9 montrent un autre exemple de réalisation d'une machine agricole de travail du sol (101) selon l'invention.

Cette machine agricole de travail du sol (101) comporte quasiment les mêmes moyens que la machine agricole de travail du sol (1) précédente, mais sous des formes globalement différentes. Ainsi elle comporte également un châssis (102) muni d'une structure porteuse (129) formée de deux organes porteurs (128, 28A) sensiblement verticaux, dont l'un est constitué par un carter latéral (7) et l'autre par une paroi latérale (127), et qui sont liés entre eux à leur extrémité supérieure par une poutre (non représentée), similaire à la poutre (30), s'étendant transversalement par rapport à la direction d'avance (105) au travail. La structure porteuse (129) supporte un rotor (104) lié aux extrémités inférieures des organes porteurs (128, 28A) par des éléments de liaison (166, 66A). Les éléments de liaison (66A), situés côté carter latéral (7), sont identiques à ceux de la machine de travail du sol (1) de l'exemple précédent et ne seront donc pas redécrits. Les autres éléments de liaison (166) quant à eux, comportent notamment des moyens de guidage (173) et des organes de positionnement (132, 132′) solidaires de l'organe porteur (128) qui collaborent avec des moyens de guidage (174) et des organes de positionnement (136, 136′) solidaires du rotor (104). Ces éléments de liaison (166) comportent également des organes d'assemblage (133) constitués de boulons (154, 154′) permettant de solidariser le rotor (104) avec la paroi latérale (127) correspondante de la structure porteuse (129).

Le rotor (104) utilisé dans cet exemple de réalisation est composé principalement d'un support central (122) qui comporte notamment des disques bombés (159) montés de manière démontable sur ledit support central (122). A cet effet, le support central (122) est constitué par une âme centrale (124) sur laquelle sont agencés des flasques (125). Sur chaque flasque (125) est fixé au moyen de boulons (126), un disque bombé (159), circulaire dans cet exemple, à la périphérie duquel sont montés, également de manière démontable, des bêches (123).

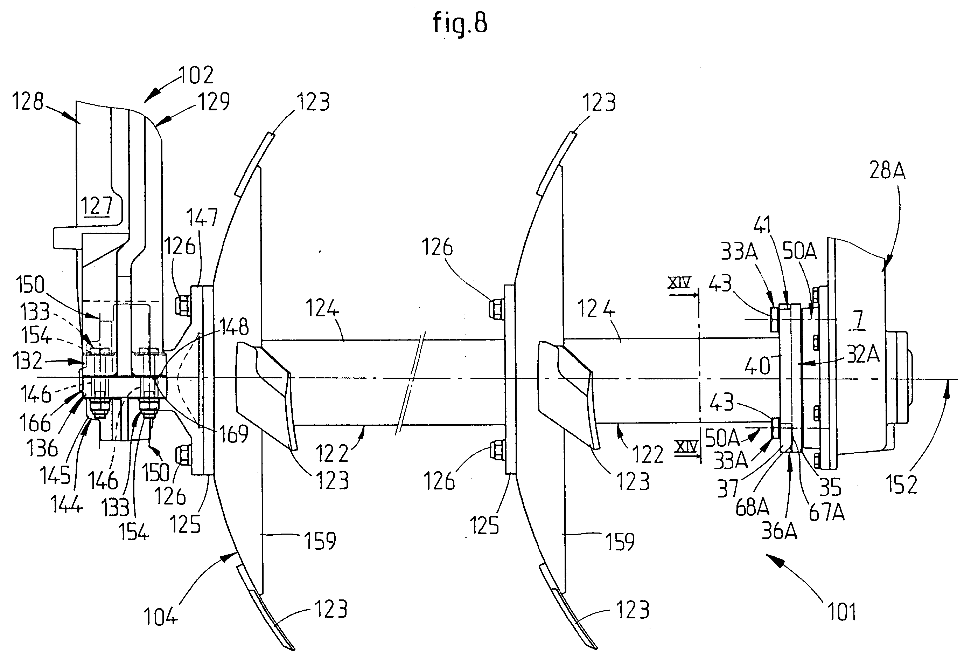

Le rotor (104) est entraîné par des organes d'entraînement (35, 37) identiques dans leur forme à ceux utilisés précédemment et qui apparaissent sur les figures 4 et 8. Pour accoupler et lier les organes d'entraînement (35, 37) entre eux, on procède comme décrit précédemment.

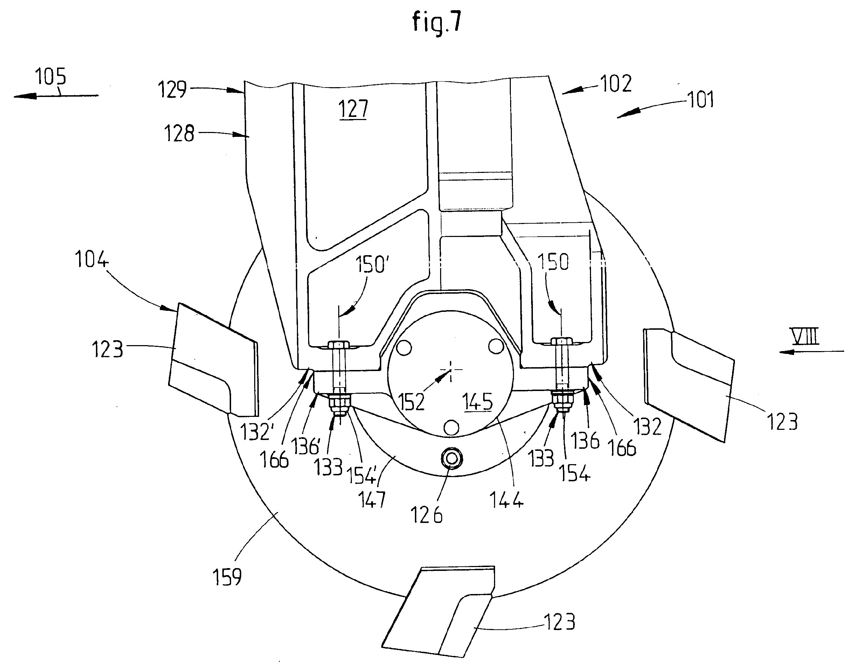

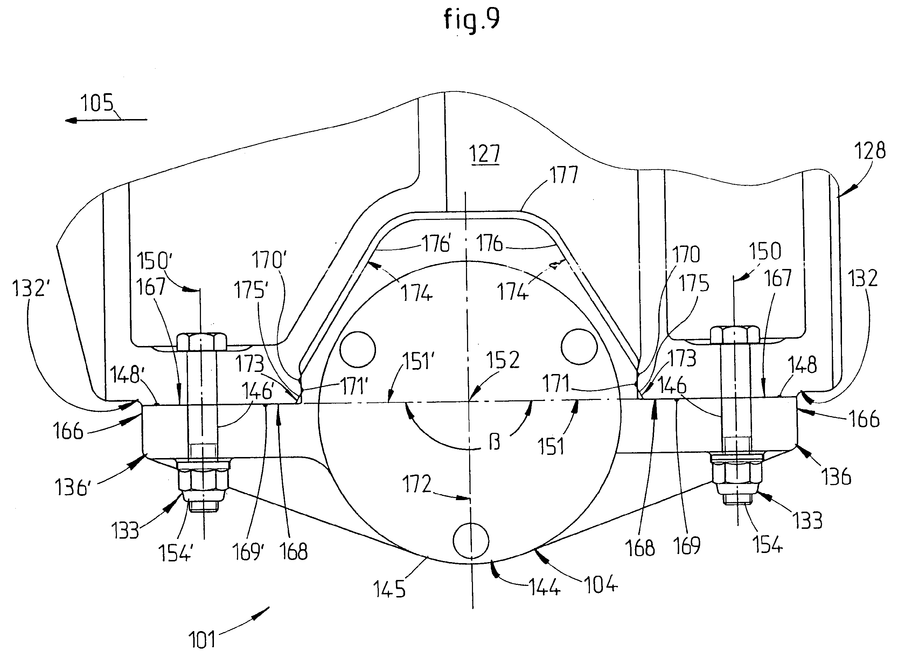

Sur les figures 7 et 9, il apparaît que le support central (122) du rotor (104) supporte en sus, un palier (144) agencé à l'extrémité longitudinale du support central (122) près de la paroi latérale (127). Ce palier (144) se compose principalement d'un corps (145) lié à la paroi latérale (127) et d'un arbre (147) guidé dans ledit corps (145) au moyen d'une liaison cylindrique. Certains boulons (126) lient également de manière démontable, l'arbre (147) du palier (144) au flasque (125) situé à l'extrémité longitudinale du support central (122) du rotor (104).

D'une façon similaire à l'exemple de réalisation précédent, le corps (145) du palier (144) comporte notamment deux organes de positionnement (136, 136′) munis d'une surface de contact (168) (figure 9). Situés symétriquement de part et d'autre dudit corps (145), chacun des deux organes de positionnement (136, 136′) supporte une portion (169, 169′) de surface plane de contact traversée par deux trous (146, 146′) oblongs dans une direction au moins sensiblement parallèle à l'axe longitudinal (152) du rotor (104) et situés de part et d'autre du plan médian contenu dans la paroi latérale (127) (voir également la figure 8). Ces deux portions (169, 169′) de surface plane de contact collaborent avec des portions (148, 148′) de surface plane de contact liées aux organes de positionnement (132, 132′) situés à l'extrémité inférieure de la paroi latérale (127).

La portion (148) respectivement (169) de surface de contact définit un plan (151) tandis que la portion (148′) respectivement (169′) de surface de contact définit un plan (151′) ; il apparaît que l'angle (β) entre les deux plans géométriques (151, 151′) est, dans cet exemple, de 180 degrés. Ils sont du reste horizontaux et contiennent l'axe (152) du rotor (104). Dans ce cas particulier, où les plans géométriques (151, 151′) sont confondus, les surfaces de contact (167, 168) ne positionnent le palier (144) du rotor (104) que suivant une direction sensiblement verticale. Par conséquent il est nécessaire d'adjoindre deux portions (171, 171′) de surface de positionnement plane au palier (144) du rotor (104) et deux portions (170, 170′) de surface de positionnement plane complémentaires à la paroi latérale (127) de la structure porteuse (129). Toutes ces portions (170, 170′, 171, 171′) de surface de positionnement sont orthogonales aux surfaces de contact (167, 168) respectives. Elles sont (du reste) réparties symétriquement par rapport à un plan vertical (172) contenant l'axe longitudinal (152) du rotor (104), de même d'ailleurs que les portions (148, 148′), respectivement (169, 169′) de surface de contact.

Les portions (171, 171′) de surface de positionnement sont liées aux organes de positionnement (136, 136′) du palier (144) et les deux autres portions (170, 170′) de surface de positionnement sont liées aux organes de positionnement (132, 132′) de la paroi latérale (127) (figure 9).

Sur la figure 9 notamment, apparaissent également des moyens de guidage (173, 174) qui équipent la paroi latérale (127), respectivement le rotor (104). Les moyens de guidage (173) équipant la paroi latérale (127), sont constitués par un chanfrein (175, 175′) agencé à l'angle de chaque portion (170, 170′) de surface de positionnement et de la portion (148, 148′) de surface de contact correspondante. Lors du montage du rotor (104) dans l'extrémité inférieure de la paroi latérale (127), chaque chanfrein (175, 175′) collabore avec une portion (176, 176′) de surface de guidage correspondante dudit rotor (104). Ces deux portions (176, 176′) de surface de guidage constituent les moyens de guidage (174) du rotor (104) et sont convergentes vers le haut de sorte à former un "V" renversé. Ces deux portions (176, 176′) de surface de guidage s'étendent au moins sensiblement symétriquement par rapport au plan vertical (172) passant par l'axe longitudinal (152) du rotor (104) et forment entre elles un angle aigu. Dès lors que l'une des portions (176, 176′) de surface de guidage arrive en contact avec l'un des deux chanfreins (175, 175′) de la paroi latérale (127), une simple translation de cette dernière vers le bas suffit à positionner précisément le palier (144) du rotor (104) dans la paroi latérale (127) par les portions (148, 148′, 169, 169′) de surface de contact et les portions (170, 170′, 171, 171′) de surface de positionnement. La paroi latérale (127) présente du reste une échancrure (177) qui, dans cette position épouse sensiblement les deux portions (176, 176′) de surface de guidage du rotor (104). Un certain jeu subsiste néanmoins entre ladite échancrure (177) et lesdites portions (176, 176′) de surface de guidage.

Pour fixer le palier (144) du rotor (104) à la paroi latérale (127), il suffit de mettre en place les organes d'assemblage (133) des éléments de liaison (166), c'est-à-dire à passer les boulons (154, 154′) à travers chacun des deux organes de positionnement (132, 132′) liés à ladite paroi latérale (127) et à travers les trous oblongs (146, 146′) des organes de positionnement (136, 136′) correspondants liés au palier (144) du rotor (104). Dans cet exemple de réalisation, les portions (148, 169) respectivement (148′, 169′) de surface de contact sont traversées par deux boulons (154) respectivement (154′) dont l'une s'étend d'un côté de la paroi latérale (127) et l'autre s'étend de l'autre côté de ladite paroi latérale (127). En sus, l'axe (150, 150′) de chaque boulon (154, 154′) s'étend au moins sensiblement orthogonalement à chaque portion (148, 169, 148′, 169′) de surface de contact respective et au moins sensiblement orthogonalement à l'axe longitudinal (152) du rotor (104).

Le changement de rotor est, quant à lui, très proche dans le principe, de celui de la machine agricole (1) décrite dans l'exemple de réalisation précédent. La seule différence notable par rapport à cet exemple de réalisation provient des moyens de guidage (173, 174) qui seuls guident le rotor (104) dans la paroi latérale (127) lors du montage du rotor (104), les organes de positionnement (132, 132′, 136, 136′) ne servant qu'au positionnement dudit rotor (104) par rapport à ladite paroi latérale (127).

Finalement, différentes modifications restent possibles notamment en ce qui concerne la constitution des divers éléments ou par substitution d'équivalents techniques, sans pour autant sortir du domaine de protection défini par les revendications.

## Revendications

1. Machine agricole de travail du sol (1 ; 101) comportant un châssis (2 ; 102) muni d'au moins une structure porteuse (29 ; 129) comprenant deux organes porteurs (28, 28A ; 128, 28A) qui supportent un rotor (4 ; 104) dont l'axe longitudinal (52 ; 152) s'étend au moins sensiblement horizontalement et transversalement par rapport à la direction d'avance (5 ; 105) au travail, et qui est lié aux organes porteurs (28, 28A ; 128, 28A) à l'aide d'éléments de liaison (66, 66A ; 166, 66A), les éléments de liaison (66 ; 166) liant le rotor (4 ; 104) à l'un (28 ; 128) au moins des organes porteurs (28, 28A ; 128, 28A) comportant des organes de positionnement (32, 32′, 36, 36′ ; 132, 132′, 136, 136′) du rotor (4 ; 104) par rapport à cet organe porteur (28 ; 128) et au moins un organe d'assemblage (33 ; 133) dont l'axe longitudinal (50, 50′ ; 150, 150′) s'étend au moins sensiblement orthogonalement à l'axe longitudinal (52 ; 152) du rotor (4 ; 104), lesdits organes de positionnement (32, 32′, 36, 36′ ; 132, 132′, 136, 136′) comportant notamment deux surfaces de contact (67, 68 ; 167, 168) dont l'une (67 ; 167) est prévue sur ledit organe porteur (28 ; 128) et l'autre (68 ; 168) sur le rotor (4 ; 104), qui s'étendent au moins sensiblement suivant la direction de l'axe longitudinal (52 ; 152) dudit rotor (4 ; 104) et qui sont maintenues en contact l'une avec l'autre au moyen dudit (desdits) organe(s) d'assemblage (33 ; 133), caractérisée par le fait que ledit (lesdits) organe(s) d'assemblage (33 ; 133) traverse(nt) lesdites surfaces de contact (67, 68 ; 167, 168) qui comportent, à cet effet, des trous (46, 46′ ; 146, 146′) dont un certain nombre au moins présente une forme autorisant une compensation des tolérances de fabrication du rotor (4 ; 104) et/ou de la structure porteuse (29 ; 129) dans une direction au moins sensiblement parallèle à l'axe longitudinal du rotor (4 ; 104).

2. Machine agricole de travail du sol selon la revendication 1, caractérisée par le fait que les trous (46, 46′ ; 146, 146′) présentant une forme autorisant une compensation des tolérances de fabrication du rotor (4 ; 104) et/ou de la structure porteuse (29 ; 129) dans une direction au moins sensiblement parallèle à l'axe longitudinal (52 ; 152) du rotor (4 ; 104) sont des trous (46 ; 146) oblongs dans une direction au moins sensiblement parallèle à l'axe longitudinal (52 ; 152) du rotor (4 ; 104).

3. Machine agricole de travail du sol selon la revendication 1 ou 2, caractérisée par le fait que chaque surface de contact (67, 68 ; 167, 168) est formée par deux portions (48, 48′, 69, 69′; 148, 148′, 169, 169′) de surface de contact s'étendant, en vue suivant l'axe longitudinal (52 ; 152) du rotor (4 ; 104), de part et d'autre dudit axe longitudinal (52 ; 152).

4. Machine agricole de travail du sol selon la revendication 3, caractérisée par le fait que chaque portion (48, 48′, 69, 69′ ; 148, 148′, 169, 169′) de surface de contact est plane.

5. Machine agricole de travail du sol selon la revendication 4, caractérisée par le fait que les deux portions (48, 48′, 69, 69′) de surface de contact de chaque surface de contact (67, 68) sont convergentes.

6. Machine agricole de travail du sol selon la revendication 5, caractérisée par le fait que les deux portions (48, 48′, 69, 69′) de surface de contact de chaque surface de contact (67, 68) sont convergentes vers le haut.

7. Machine agricole de travail du sol selon la revendication 5 ou 6, caractérisée par le fait que les deux portions (48, 48′, 69, 69′) de surface de contact de chaque surface de contact (67, 68) forment entre elles un angle obtu.

8. Machine agricole de travail du sol selon l'une au moins des revendications 5 à 7, caractérisée par le fait que les deux portions (48, 48′, 69, 69′) de surface de contact s'étendent en-dessous d'un plan horizontal contenant l'axe longitudinal (52) du rotor (4).

9. Machine agricole de travail du sol selon l'une au moins des revendications 5 à 8, caractérisée par le fait que les deux portions (48, 48′, 69, 69′) de surface de contact se coupent réellement ou virtuellement au moins sensiblement au niveau de l'axe longitudinal (52) du rotor (4).

10. Machine agricole de travail du sol selon la revendication 4, caractérisée par le fait que les deux portions (148, 148′, 169, 169′) de surface de contact de chaque surface de contact (167, 168) sont au moins sensiblement parallèles entre elles.

11. Machine agricole de travail du sol selon la revendication 10, caractérisée par le fait que les deux portions (148, 148′, 169, 169′) de surface de contact de chaque surface de contact (167, 168) sont au moins sensiblement coplanaires.

12. Machine agricole de travail du sol selon la revendication 11, caractérisée par le fait que les deux portions (148, 148′, 169, 169′) de surface de contact de chaque surface de contact (167, 168) s'étendent au moins sensiblement au niveau de l'axe longitudinal (152) du rotor (104).

13. Machine agricole de travail du sol selon l'une au moins des revendications 10 à 12, caractérisée par le fait que les deux portions (148, 148′, 169, 169′) de surface de contact de chaque surface de contact (167, 168) s'étendent au moins sensiblement horizontalement.

14. Machine agricole de travail du sol selon l'une au moins des revendications 10 à 13, caractérisée par le fait que les organes de positionnement (132, 132′, 136, 136′) comportent en sus deux portions (170, 170′) de surface de positionnement solidaires dudit organe porteur (128), qui collaborent avec deux portions (171, 171′) de surface de positionnement solidaires du rotor (104) et au moins sensiblement orthogonales aux deux portions (169, 169′) de surface de contact également solidaires du rotor (104).

15. Machine agricole de travail du sol selon la revendication 14, caractérisée par le fait que les deux portions (170, 170′, 171, 171′) de surface de positionnement de chaque surface de positionnement s'étendent au moins sensiblement symétriquement par rapport à un plan (172) dirigé vers le haut, de préférence au moins sensiblement vertical, et passant par l'axe longitudinal (152) du rotor (104).

16. Machine agricole de travail du sol selon l'une au moins des revendications 3 à 15, caractérisée par le fait que les deux portions (48, 48′, 69, 69′ ; 148, 148′, 169, 169′) de surface de contact de chaque surface de contact (67, 68 ; 167, 168) s'étendent au moins sensiblement symétriquement par rapport à un plan (72 ; 172) dirigé vers le haut, de préférence au moins sensiblement vertical, et passant par l'axe longitudinal (52 ; 152) du rotor (4 ; 104).

17. Machine agricole de travail du sol selon l'une au moins des revendications 3 à 16, caractérisée par le fait que chaque portion (48, 48′, 69, 69′ ; 148, 148′, 169, 169′) de surface de contact est traversée par au moins un organe d'assemblage (33 ; 133).

18. Machine agricole de travail du sol selon la revendication 17, caractérisée par le fait que ledit organe porteur (28) comporte une paroi (27) dirigée vers le haut, de préférence au moins sensiblement verticale, et que chaque portion (48, 48′, 69, 69′) de surface de contact est traversée par un ou plusieurs organes d'assemblage (33) s'étendant du côté de ladite paroi (27) opposé à celui où s'étend le rotor (4).

19. Machine agricole de travail du sol selon la revendication 17, caractérisée par le fait que ledit organe porteur (128) comporte une paroi (127) dirigée vers le haut, de préférence au moins sensiblement verticale, et que chaque portion (148, 148′, 169, 169′) de surface de contact est traversée par au moins deux organes d'assemblage (133) dont l'un (un certain nombre d'entre eux) s'étend(ent) d'un côté de ladite paroi (127) et l'autre (les autres) s'étend(ent) de l'autre côté de ladite paroi (127).

20. Machine agricole de travail du sol selon l'une au moins des revendications 1 à 19, caractérisée par le fait que l'axe longitudinal (50 ; 150) dudit (desdits) organe(s) d'assemblage (33 ; 133) s'étend(ent) au moins sensiblement orthogonalement aux deux surfaces de contact (67, 68 ; 167, 168).

21. Machine agricole de travail du sol selon l'une au moins des revendications 1 à 20, caractérisée par le fait qu'il est prévu un organe de protection (55) protégeant en partie au moins lesdits éléments de liaison (66).

22. Machine agricole de travail du sol selon la revendication 21, caractérisée par le fait que l'organe de protection (55) est solidaire des éléments de liaison (66).

23. Machine agricole de travail du sol selon la revendication 21 ou 22, caractérisée par le fait que l'organe de protection (55) est constitué par un patin.

24. Machine agricole de travail du sol selon l'une au moins des revendications 1 à 23, caractérisée par le fait que les éléments de liaison (66 ; 166) comportent en sus des moyens de guidage (73, 74 ; 173, 174) permettant la mise en place automatique du rotor (4 ; 104) dans la structure porteuse (29 ; 129) correspondante.

25. Machine agricole de travail du sol selon la revendication 24 prise en combinaison avec l'une au moins des revendications 3 à 9, caractérisée par le fait que les moyens de guidage (73, 74) sont constitués par les portions (48, 48′, 69, 69′) de surface de contact.

26. Machine agricole de travail du sol selon la revendication 24 prise en combinaison avec l'une au moins des revendications 10 à 15, caractérisée par le fait que les moyens de guidage (173, 174) comportent deux portions (176, 176′)de surface de guidage solidaires du rotor (104), s'étendant au moins sensiblement suivant la direction de l'axe longitudinal (152) du rotor (104) et convergeant vers le haut.

27. Machine agricole de travail du sol selon la revendication 26, caractérisée par le fait que les deux portions (176, 176′) de surface de guidage forment entre elles un angle aigu.

28. Machine agricole de travail du sol selon la revendication 26 ou 27, prise en combinaison avec la revendication 14 ou 15, caractérisée par le fait qu'à l'angle de chaque portion (170, 170′) de surface de positionnement et de la portion (148, 148′) de surface de contact correspondante est prévu un chanfrein (175, 175′) faisant partie des moyens de guidage (173) et collaborant avec la portion (176, 176′) de surface de guidage correspondante du rotor (104) lors du montage de celui-ci.

29. Machine agricole de travail du sol selon l'une au moins des revendications 26 à 28, caractérisée par le fait que les deux portions (176, 176′) de surface de guidage s'étendent au moins sensiblement symétriquement par rapport à un plan (172) dirigé vers le haut de préférence au moins sensiblement vertical, et passant par l'axe longitudinal (152) du rotor (104).

30. Machine agricole de travail du sol selon l'une au moins des revendications 26 à 29, caractérisée par le fait que ledit organe porteur (128) présente une échancrure (177) épousant au moins sensiblement les deux portions de surface de guidage (176, 176′), un certain jeu subsistant entre ladite échancrure (177) et lesdites portions (176, 176′) de surface de guidage lorsque les surfaces de contact (167, 168) sont en contact l'une avec l'autre.

## Patentansprüche

1. Landmaschine zur Bearbeitung des Bodens (1;101), die einen Rahmen (2; 102) aufweist, der mit mindestens einem Tragwerk (29; 129) versehen ist, das zwei Trägerorgane (28, 28A; 128, 28A) umfaßt, die einen Rotor (4; 104) tragen, dessen Längsachse (52; 152) sich mindestens im wesentlichen horizontal und quer zur Fortbewegungsrichtung (5; 105) im Betrieb erstreckt und der mit den Trägerorganen (28, 28A; 128, 28A) mittels Verbindungselementen (66, 66A; 166, 66A) verbunden ist, welche Verbindungselemente ( 66; 166), die den Rotor (4; 104) mit mindestens einem (28; 128) der Trägerorgane (28, 28A; 128, 28A) verbinden, Organe zur Einstellung (32, 32′, 36, 36′; 132, 132′, 136, 136′) des Rotors (4; 104) in bezug auf dieses Trägerorgan (28; 128) und mindestens ein Zusammenbauorgan (33; 133), dessen Längsachse (50, 50′; 150, 150′) sich mindestens im wesentlichen rechtwinkelig zur Längsachse (52; 152) des Rotors (4; 104) erstreckt, umfassen, wobei die Einstellorgane (32, 32′ 36, 36′; 132, 132′, 136, 136′) insbesondere zwei Berührungsflächen (67, 68; 167, 168) aufweisen, von welchen die eine (67; 167) am Trägerorgan (28; 128) und die andere (68 ; 168) am Rotor (4; 104) vorgesehen sind, die sich mindestens im wesentlichen in Richtung der Längsachse (52; 152) des Rotors (4; 104) erstrecken und die miteinander mittels des (der) Zusammenbauorgans (Zusammenbauorgane) (33; 133) in Kontakt gehalten sind, dadurch gekennzeichnet, daß das (die) Zusammenbauorgan(e) ( 33; 133) die Berührungsflächen (67, 68; 167, 168) durchsetzt (durchsetzen), die zu diesem Zweck Löcher (46, 46′; 146, 146′) aufweisen, von denen eine gewisse Anzahl mindestens eine Form besitzen, die eine Kompensation von Fertigungstoleranzen des Rotors (4; 104) und/oder des Tragwerks (29; 129) in einer zumindest im wesentlichen zur Längsachse des Rotors (4; 104) parallelen Richtung zulassen.

2. Landmaschine zur Bearbeitung des Bodens nach Anspruch 1, dadurch gekennzeichnet, daß die Löcher (46, 46′; 146, 146′), die eine Form aufweisen, die eine Kompensation von Fertigungstoleranzen des Rotors (4; 104) und/oder des Tragwerks (29; 129) in einer zumindest im wesentlichen zur Längsachse (52; 152) des Rotors (4; 104) parallelen Richtung zulassen, Langlöcher (46, 146) in einer zumindest im wesentlichen zur Längsachse (52; 152) des Rotors (4; 104) parallelen Richtung sind.

3. Landmaschine zur Bodenbearbeitung nach Anspruch 1 oder 2, dadurch gekennzeichnet, daß jede Berührungsfläche (67, 68; 167, 168) durch zwei Berührungsflächenteile (48, 48′, 69,69′; 148, 148′, 169, 169′) gebildet ist, die sich, in Richtung der Längsachse (52; 152) des Rotors (4; 104) gesehen, zu beiden Seiten der Längsachse (52; 152) erstrecken.

4. Landmaschine zur Bodenbearbeitung nach Anspruch 3, dadurch gekennzeichnet, daß jeder Berührungsflächenteil (48, 48′, 69, 69′; 148, 148′, 169, 169′) eben ist.

5. Landmaschine zur Bodenbearbeitung nach Anspruch 4, dadurch gekennzeichnet, daß die zwei Berührungsflächenteile (48, 48′, 69, 69′) jeder Berührungsfläche ( 67, 68) konvergent sind.

6. Landmaschine zur Bodenbearbeitung nach Anspruch 5, dadurch gekennzeichnet, daß die zwei Berührungsflächenteile (48, 48′, 69,69′) jeder Berührungsfläche (67 68) konvergent nach oben sind.

7. Landmaschine zur Bodenbearbeitung nach Anspruch 5 oder 6, dadurch gekennzeichnet, daß die zwei Berührungsflächenteile (48, 48′, 69, 69′) jeder Berührungsfläche (67, 68) miteinander einen stumpfen Winkel bilden.

8. Landmaschine zur Bodenbearbeitung nach mindestens einem der Ansprüche 5 bis 7, dadurch gekennzeichnet, daß die zwei Berührungsflächenteile (48, 48′, 69, 69′) sich unterhalb einer die Längsachse (52) des Rotors (4) enthaltenden Horizontalebene erstrecken

9. Landmaschine zur Bodenbearbeitung nach mindestens einem der Ansprüche 5 bis 8, dadurch gekennzeichnet, daß die zwei Berührungsflächenteile (48, 48′, 69, 69′) sich tatsächlich oder virtuell mindestens im wesentlichen in der Höhe der Längsachse (52) des Rotors (4) schneiden.

10. Landmaschine zur Bodenbearbeitung nach Anspruch 4, dadurch gekennzeichnet, daß die zwei Berührungsflächenteile (148, 148′, 169, 169′) jeder Berührungsfläche (167, 168) zumindest im wesentlichen parallel zueinander sind.

11. Landmaschine zur Bodenbearbeitung nach Anspruch 10, dadurch gekennzeichnet, daß die zwei Berührungsflächenteile (148, 148′, 169, 169′) jeder Berührungsfläche (167, 168) zumindest im wesentlichen koplanar sind.

12. Landmaschine zur Bodenbearbeitung nach Anspruch 11, dadurch gekennzeichnet, daß sich die zwei Berührungsflächenteile (148, 148′, 169, 169′) jeder Berührungsfläche (167, 168) zumindest im wesentlichen in der Höhe der Längsachse (152) des Rotors (104) erstrecken.

13. Landmaschine zur Bodenbearbeitung nach mindestens einem der Ansprüche 10 bis 12, dadurch gekennzeichnet, daß sich die zwei Berührungsflächenteile (148, 148′, 169, 169′) jeder Berührungsfläche (167, 168) zumindest im wesentlichen horizontal erstrecken.

14. Landmaschine zur Bodenbearbeitung nach mindestens einem der Ansprüche 10 bis 13, dadurch gekennzeichnet, daß die Einstellorgane (132, 132′, 136, 136′) noch zwei mit dem Trägerorgan (128) fest verbundene Einstellflächenteile (170, 170′) aufweisen, die mit zwei Einstellflächenteilen (171, 171′) zusammenarbeiten, die mit dem Rotor (104) fest verbunden und mindestens im wesentlichen rechtwinkelig zu den zwei, ebenfalls mit dem Rotor (104) fest verbundenen Berührungsflächenteilen (169, 169′) sind.

15. Landmaschine zur Bodenbearbeitung nach Anspruch 14, dadurch gekennzeichnet, daß sich die zwei Einstellflächenteile (170, 170′, 171, 171′) jeder Einstellfläche zumindest im wesentlichen symmetrisch zu einer nach oben gerichteten, vorzugsweise zumindest im wesentlichen vertikalen und durch die Längsachse (152) des Rotors (104) laufenden Ebene (172) erstrecken.

16. Landmaschine zur Bodenbearbeitung nach mindestens einem der Ansprüche 3 bis 15, dadurch gekennzeichnet, daß sich die zwei Berührungsflächenteile (48, 48′ 69, 69′; 148, 148′, 169, 169′) jeder Berührungsfläche (67, 68; 167, 168) zumindest im wesentlichen symmetrisch zu einer nach oben gerichteten, vorzugsweise zumindest im wesentlichen vertikalen und durch die Längsachse (52; 152) des ROtors (4; 104) laufenden Ebene (72; 172) erstrecken.

17. Landmaschine zur Bodenbearbeitung nach mindestens einem der Ansprüche 3 bis 16, dadurch gekennzeichnet, daß jeder Berührungsflächenteil (48, 48′ 69, 69′; 148, 148′, 169, 169′) von mindestens einem Zusammenbauorgan (33; 133) durchsetzt ist.

18. Landmaschine zur Bodenbearbeitung nach Anspruch 17, dadurch gekennzeichnet, daß das Trägerorgan (28) eine nach oben gerichtete, vorzugsweise zumindest im wesentlichen vertikale Wand (27) aufweist und daß jeder Berührungsflächenteil (48, 48′, 69, 69′) von einem oder mehreren Zusammenbauorganen (33) durchsetzt ist, die sich auf der Seite der Wand (27) erstrecken, die sich gegenüber der Seite auf welche sich der Rotor (4) erstreckt, befindet.

19. Landmaschine zur Bodenbearbeitung nach Anspruch 17, dadurch gekennzeichnet, daß das Trägerorgan (128) eine nach oben gerichtete, vorzugsweise zumindest im wesentlichen vertikale Wand (127) aufweist und daß jeder Berührungsflächenteil (148, 148′, 169, 169′) von mindestens zwei Zusammenbauorganen (133) durchsetzt ist, von denen sich das eine (eine bestimmte Anzahl von diesen) auf einer Seite der Wand (127) erstreckt und das andere (die anderen) sich auf der anderen Seite der Wand (127) erstreckt (erstrecken).

20. Landmaschine zur Bodenbearbeitung nach mindestens einem der Ansprüche 1 bis 19, dadurch gekennzeichnet, daß sich die Längsachse (50; 150) des (der) Zusammenbauorgans (Zusammenbauorgane) (33; 133) zumindest im wesentlichen rechtwinkelig zu den zwei Berührungsflächen (67, 68; 167, 168) erstreckt (erstrecken).

21. Landmaschine zur Bodenbearbeitung nach mindestens einem der Ansprüche 1 bis 20, dadurch gekennzeichnet, daß ein Schutzorgan (55) vorgesehen ist, das zumindest teilweise die Verbindungselemente (66) schützt.

22. Landmaschine zur Bodenbearbeitung nach Anspruch 21, dadurch gekennzeichnet, daß das Schutzorgan (55) fest mit den Verbindungselementen (66) verbunden ist.

23. Landmaschine zur Bodenbearbeitung nach Anspruch 21 oder 22, dadurch gekennzeichnet, daß das Schutzorgan (55) aus einer Gleitkufe besteht.

24. Landmaschine zur Bodenbearbeitung nach mindestens einem der Ansprüche 1 bis 23, dadurch gekennzeichnet, daß die Verbindungselemente (66; 166) zudem Führungsmittel (73, 74; 173, 174) aufweisen, die den automatischen Einbau des Rotors (4; 104) in das entsprechende Tragwerk (29; 129) ermöglichen.

25. Landmaschine zur Bodenbearbeitung nach Anspruch 24 in Kombination mit mindestens einem der Ansprüche 3 bis 9, dadurch gekennzeichnet, daß die Führungsmittel (73, 74) aus den Berührungsflächenteilen (48, 48′, 69, 69′) gebildet sind.

26. Landmaschine zur Bodenbearbeitung nach Anspruch 24 in Kombination mit mindestens einem der Ansprüche 10 bis 15, dadurch gekennzeichnet, daß die Führungsmittel (173, 174) zwei, fest mit dem Rotor (104) verbundene Führungsflächenteile ( 176, 176′) aufweisen, die sich zumindest im wesentlichen in Richtung der Längsachse (152) des Rotors (104) erstrecken und nach oben konvergieren.

27. Landmaschine zur Bodenbearbeitung nach Anspruch 26, dadurch gekennzeichnet, daß die zwei Führungsflächenteile (176, 176′) zueinander einen spitzen Winkel bilden.

28. Landmaschine zur Bodenbearbeitung nach Anspruch 26 oder 27 in Kombination mit Anspruch 14 oder 15, dadurch gekennzeichnet, daß an der Kante zwischen jedem Einstellflächenteil (170, 170′) und dem entsprechenden Berührungsflächenteil(148, 148′) eine Schrägfläche (175, 175′) vorgesehen ist, die einen Teil der Führungsmittel (173) bilden und mit dem entsprechenden Führungsflächenteil (176, 176′) des Rotors (104) bei der Montage desselben zusammenarbeiten.

29. Landmaschine zur Bodenbearbeitung nach mindestens einem der Ansprüche 26 bis 28, dadurch gekennzeichnet, daß sich die zwei Führungsflächenteile (176,176′) zumindest im wesentlichen symmetrisch zu einer nach oben gerichteten, vorzugsweise zumindest im wesentlichen vertikalen und durch die Längsachse (152)des Rotors (104) laufenden Ebene (172) erstrecken.

30. Landmaschine zur Bodenbearbeitung nach mindestens einem der Ansprüche 26 bis 29, dadurch gekennzeichnet, daß das Trägerorgan (128) eine Aussparung (177) aufweist, die zumindest im wesentlichen die zwei Führungsflächenteile (176, 176′) einnimmt, wobei ein gewisses Spiel zwischen der Aussparung (177) und den Führungsflächenteilen (176, 176′) vorhanden ist, wenn die Berührungsflächen (167,168) miteinander in Kontakt sind.

## Claims

1. An agricultural machine for working the soil (1; 101) having a frame (2; 102) equipped with at least one carrying structure (29; 129) comprising two carrying elements (28, 28A; 128, 28A) which support a rotor (4; 104) whose longitudinal axis (52; 152) extends at least approximately horizontally and transversely in relation to the direction of advance (5; 105) during work, and which is connected to the carrying elements (28, 28A; 128, 28A) with the help of connecting elements (66, 66A; 166, 66A), the connecting elements (66; 166) connecting the rotor (4; 104) to one (28; 128) at least of the carrying elements (28, 28A; 128, 28A) having elements for the positioning (32, 32′, 36, 36′; 132, 132′, 136, 136′) of the rotor (4; 104) in relation to this carrying element (28; 128) and at least one assembly element (33; 133) whose longitudinal axis (50, 50′; 150, 150′) extends at least approximately orthogonally to the longitudinal axis (52; 152) of the rotor (4; 104), the said positioning elements (32, 32′, 36, 36′; 132, 132′, 136, 136′) having in particular two contact surfaces (67, 68; 167, 168) of which one (67; 167) is provided on the said carrying element (28; 128) and the other (68; 168) on the rotor (4; 104), which extend at least approximately following the direction of the longitudinal axis (52; 152) of the said rotor (4; 104) and which are maintained in contact with one another by means of the said assembly element(s) (33; 133), characterised in that the said assembly element(s) (33; 133) crosses (cross) the said contact surfaces (67, 68; 167, 168) which have, for this purpose, holes (46, 46′; 146, 146′) of which a certain number at least have a shape allowing compensation for the manufacturing tolerances of the rotor (4; 104) and/or of the carrying structure (29; 129) in a direction at least approximately parallel to the longitudinal axis of the rotor (4; 104).

2. An agricultural machine for working the soil in accordance with claim 1, characterised in that the holes (46, 46′; 146, 146′) having a shape allowing compensation for the manufacturing tolerances of the rotor (4; 104) and/or of the carrying structure (29; 129) in a direction at least approximately parallel to the longitudinal axis (52; 152) of the rotor (4; 104) are holes (46; 146) which are oblong in a direction at least approximately parallel to the longitudinal axis (52; 152) of the rotor (4; 104).

3. An agricultural machine for working the soil in accordance with claim 1 or 2, characterised in that each contact surface (67, 68; 167, 168) is formed by two contact surface portions (48, 48′, 69, 69′; 148, 148′, 169, 169′) extending, when seen along the longitudinal axis (52; 152) of the rotor (4; 104), on either side of the said longitudinal axis (52; 152).

4. An agricultural machine for working the soil in accordance with claim 3, characterised in that each contact surface portion (48, 48′, 69, 69′; 148, 148′, 169, 169′) is flat.

5. An agricultural machine for working the soil in accordance with claim 4, characterised in that the two contact surface portions (48, 48′;, 69, 69′) of each contact surface (67, 68) are convergent.

6. An agricultural machine for working the soil in accordance with claim 5, characterised in that the two contact surface portions (48, 48′, 69, 69′) of each contact surface (67, 68) are upwardly convergent.

7. An agricultural machine for working the soil in accordance with claim 5 or 6, characterised in that the two contact surface portions (48, 48′, 69, 69′) of each contact surface (67, 68) form between them an obtuse angle.

8. An agricultural machine for working the soil in accordance with one at least of claims 5 to 7, characterised in that the two contact surface portions (48, 48′, 69, 69′) extend under a horizontal plane containing the longitudinal axis (52) of the rotor (4).

9. An agricultural machine for working the soil in accordance with one at least of claims 5 to 8, characterised in that the two contact surface portions (48, 48′, 69, 69′) intersect each other really or virtually at least approximately in the region of the longitudinal axis (52) of the rotor (4).

10. An agricultural machine for working the soil in accordance with claim 4, characterised in that the two contact surface portions (148, 148′, 169, 169′) of each contact surface (167, 168) are at least approximately parallel with each other.

11. An agricultural machine for working the soil in accordance with claim 10, characterised in that the two contact surface portions (148, 148′, 169, 169′) of each contact surface (167, 168) are at least approximately coplanar.

12. An agricultural machine for working the soil in accordance with claim 11, characterised in that the two contact surface portions (148, 148′, 169, 169′) of each contact surface (167, 168) extend at least approximately at the level of the longitudinal axis (152) of the rotor (104).

13. An agricultural machine for working the soil in accordance with at least one of claims 10 to 12, characterised in that the two contact surface portions (148, 148′, 169, 169′) of each contact surface (167, 168) extend at least approximately horizontally.

14. An agricultural machine for working the soil in accordance with one at least of claims 10 to 13, characterised in that the positioning elements (132, 132′, 136, 136′) have in addition two positioning surface portions (170, 170′) solidly fixed to the said carrying element (128), which work with two positioning surface portions (171, 171′) solidly fixed to the rotor (104) and at least approximately orthogonal to the two contact surface portions (169, 169′) also solidly fixed to the rotor (104).

15. An agricultural machine for working the soil in accordance with claim 14, characterised in that the two positioning surface portions (170, 170′, 171, 171′) of each positioning surface extend at least approximately symmetrically in relation to an upwardly directed plane (172) which is preferably at least approximately vertical, and which passes through the longitudinal axis (152) of the rotor (104).

16. An agricultural machine for working the soil in accordance with at least one of claims 3 to 15, characterised in that the two contact surface portions (48, 48′, 69, 69′; 148, 148′, 169, 169′) of each contact surface (67, 68; 167, 168) extend at least approximately symmetrically in relation to an upwardly directed plane (72; 172) which is preferably at least approximately vertical, and which passes through the longitudinal axis (52; 152) of the rotor (4; 104).

17. An agricultural machine for working the soil in accordance with at least one of claims 3 to 16, characterised in that each contact surface portion (48, 48′, 69, 69′; 148, 148′, 169, 169′) is penetrated by at least one assembly element (33; 133).

18. An agricultural machine for working the soil in accordance with claim 17, characterised in that the said carrying element (28) has one wall (27) directed upwards, preferably at least approximately vertical, and in that each contact surface portion (48, 48′, 69, 69′) is penetrated by one or several assembly elements (33) extending on the side of the said wall (27) opposite the side where the rotor (4) extends.

19. An agricultural machine for working the soil in accordance with claim 17, characterised in that the said carrying element (128) has one wall (127) directed upwards, preferably at least approximately vertical, and in that each contact surface portion (148, 148′, 169, 169′) is penetrated by at least two assembly elements (133) of which one (a certain number of them) extends (extend) on one side of the said wall (127) and the other (others) extends (extend) on the other side of the said wall (127).

20. An agricultural machine for working the soil in accordance with at least one of claims 1 to 19, characterised in that the longitudinal axis (50; 150) of the said assembly element(s) (33; 133) extends (extend) at least approximately orthogonally to the two contact surfaces (67, 68; 167, 168).

21. An agricultural machine for working the soil in accordance with at least one of claims 1 to 20, characterised in that a protection element (55) is provided protecting in part at least the said connecting elements (66).

22. An agricultural machine for working the soil in accordance with claim 21, characterised in that the protection element (55) is solidly fixed to the connecting elements (66).

23. An agricultural machine for working the soil in accordance with claim 21 or 22, characterised in that the protection element (55) is made up by a skid.

24. An agricultural machine for working the soil in accordance with one at least of claims 1 to 23, characterised in that the connecting elements (66; 166) have in addition guiding means (73, 74; 173, 174) permitting the automatic placement of the rotor (4; 104) in the corresponding carrying structure (29; 129).

25. An agricultural machine for working the soil in accordance with claim 24 taken in combination with one at least of claims 3 to 29, characterised in that the guiding means (73, 74) are made up from the contact surface portions (48, 48′, 69, 69′).

26. An agricultural machine for working the soil in accordance with claim 24 taken in combination with one at least of claims 10 to 15, characterised in that the guiding means (173, 174) comprise two guiding surface portions (176, 176′) solidly fixed to the rotor (104), extending at least approximately along the direction of the longitudinal axis (152) of the rotor (104) and converging upwards.

27. An agricultural machine for working the soil in accordance with claim 26, characterised in that the two guiding surface portions (176, 176′) form between them an acute angle.

28. An agricultural machine for working the soil in accordance with claim 26 or 27, taken in combination with claim 14 or 15, characterised in that at the angle of each positioning surface portion (170, 170′) and of the corresponding contact surface portion (148, 148′) is provided a chamfer (175, 175′) making part of the guiding means (173) and working with the corresponding guiding surface portion (176, 176′) of the rotor (104) during the mounting of the latter.

29. An agricultural machine for working the soil in accordance with one at least of claims 26 to 28, characterised in that the two guiding surface portions (176, 176′) extend at least approximately symmetrically in relation to a plane (172) directed upwards, preferably at least approximately vertical, and passing through the longitudinal axis (152) of the rotor (104).

30. An agricultural machine for working the soil in accordance with one at least of claims 26 to 29, characterised in that the said carrying element (128) has anotch (177) following at least approximately the two guiding surface portions (176, 176′), a certain play existing between the said notch (177) and the said guiding surface portions (176, 176′) when the contact surfaces (167, 168) are in contact with one another.
